# FASCICULE DE BREVET EUROPEEN

(11) **EP 3 102 795 B1**
(45) Date de publication et mention de la délivrance du brevet: **20.09.2017**
(21) Numéro de dépôt: 15707702.5
(22) Date de dépôt: 05.02.2015
(51) Int. Cl.: F01D 25/20, F02C 7/06

(54) **TURBOMACHINE ÉQUIPÉE D'UN GROUPE DE LUBRIFICATION**
TURBINENMOTOR MIT EINER SCHMIEREINHEIT
TURBINE ENGINE PROVIDED WITH A LUBRICATION UNIT

(30) Priorité: 07.02.2014 FR 1450973
(43) Date de publication de la demande: 14.12.2016
(73) Titulaire: Safran Aircraft Engines, 75015 Paris (FR)
(72) Inventeur: GOMANNE, Benoît Jean Henri, F-77550 Moissy-Cramayel cedex (FR); BRAULT, Michel Gilbert Roland, F-77550 Moissy-Cramayel cedex (FR); CHAUVEAU, Thomas, F-77550 Moissy-Cramayel cedex (FR); WAISSI, Bellal, F-77550 Moissy-Cramayel cedex (FR)
(74) Mandataire: Gevers & Orès
(86) Numéro de dépôt international: PCT/FR2015/050282
(87) Numéro de publication internationale: WO 2015/118271

(56) Documents cités:
- EP-A1- 1 396 639
- WO-A1-2013/124590
- GB-A- 1 558 489
- GB-A- 2 160 291

## Description

### DOMAINE TECHNIQUE

La présente invention concerne une turbomachine équipée d'un groupe de lubrification.

### ETAT DE L'ART

Une turbomachine comprend en général plusieurs étages de compresseur, notamment un compresseur basse pression (BP) et un compresseur haute pression (HP), qui appartiennent au corps primaire du moteur. En amont du compresseur basse pression est disposée une roue d'aubes mobiles de grande dimension, ou soufflante, qui alimente à la fois le flux primaire qui traverse les compresseurs BP et HP et le flux froid, ou flux secondaire, qui est dirigé directement vers une tuyère de flux froid, dite tuyère secondaire. La soufflante est entraînée par l'arbre de rotation du corps BP et tourne généralement à la même vitesse que lui. Il peut cependant être intéressant de faire tourner la soufflante à une vitesse de rotation inférieure à celle de l'arbre moteur ou BP, notamment lorsque celle-ci est de très grande dimension, dans le but de mieux l'adapter aérodynamiquement. Pour cela on dispose un réducteur entre l'arbre BP et un arbre de soufflante, qui est porteur de la soufflante.

Parmi les types de réducteurs utilisés on trouve les réducteurs à train épicycloïdal, qui ont l'avantage d'offrir des taux importants de réduction de la vitesse de rotation, dans des encombrements réduits. Ces réducteurs se caractérisent par des pignons satellites qui roulent sur une couronne extérieure en tournant autour d'axes de satellites portés par un porte-satellites. Pour des raisons d'encombrement et de poids, il est avantageux de faire tourner les satellites sur leurs axes par l'intermédiaire de paliers lisses hydrodynamiques. Ces paliers nécessitent une lubrification en continu, sous peine de se détériorer rapidement, avec toutes les conséquences que cela peut avoir sur le fonctionnement du moteur et la sécurité de l'aéronef. Ils posent ainsi des difficultés en termes de sureté de fonctionnement, et nécessitent donc que soient prises des mesures de précaution contre les cas de panne, comme par exemple un blocage du réducteur ou une autorotation de la roue de soufflante (appelée couramment *windmilling*). En effet, les corps HP et BP étant découplés, il est possible que le corps BP et la soufflante tournent alors que la vitesse de rotation du corps HP est incertaine.

Dans la technique actuelle, le réducteur est lubrifié par un groupe de lubrification qui est actionné par un boîtier d'accessoires (ou AGB pour *Accessory Gear Box*) qui est en général monté dans le compartiment nacelle de l'ensemble propulsif. Ce boîtier d'accessoires comprend des moyens de prise de mouvement sur le moteur de la turbomachine, par l'intermédiaire d'un arbre radial qui est accouplé au corps HP. En cas de *windmilling,* le corps HP ne tourne pas et le groupe de lubrification n'est pas actif alors que les paliers lisses du réducteur doivent toujours être lubrifiés.

Il existe donc un besoin de pompage de l'huile pour la lubrification du réducteur, en particulier lorsque le moteur est arrêté. Pour répondre à ce besoin, on a déjà proposé d'équiper la turbomachine d'une pompe de secours dédiée à la lubrification du réducteur, de façon à ce que le réducteur puisse toujours être lubrifié, même quand le corps HP est arrêté. Dans ce cas, il est nécessaire de rajouter une prise de mouvement sur la soufflante ou un circuit d'alimentation électrique pour actionner cette pompe. Elle peut en outre poser des problèmes d'encombrement, de masse et de durée de vie. L'introduction de cette pompe présente ainsi l'inconvénient de complexifier l'architecture du moteur et va à l'encontre de l'objectif de compacité et de réduction de poids recherché.

Dans le document WO 2013/124590 A1, une turbomachine à soufflante est décrite. Dans les documents GB 1 558 489 et GB 2 160 291 A, des systèmes de transmission de couple pour une turbomachine sont décrits. La présente invention apporte notamment une solution simple, efficace et économique à au moins une partie des problèmes de la technique antérieure.

### EXPOSE DE L'INVENTION

L'invention propose une turbomachine, selon la revendication 1. L'invention propose ainsi un nouveau type d'intégration d'une pompe de lubrification dans une turbomachine, dont le carter et le rotor sont tous les deux entraînés en rotation à des vitesses différentes non nulles, l'actionnement de la pompe résultant de la différence entre ces vitesses.

Selon une caractéristique de l'invention, les arbres rotatifs sont coaxiaux. Le carter de la pompe est de préférence monté coaxialement aux arbres. La pompe peut être au moins en partie logée à l'intérieur de l'un des arbres qui sont en général tubulaires. Le réducteur a une forme annulaire. Ce dernier est traversé axialement par la pompe. Ainsi, la pompe est relativement compacte et occupe un volume qui était disponible dans la technique antérieure.

Selon l'invention, les arbres sont respectivement un arbre moteur et un arbre de soufflante, l'arbre de soufflante étant entraîné par l'arbre moteur ou BP par l'intermédiaire d'un réducteur qui est lubrifié par le groupe de lubrification. La pompe est ainsi actionnée même moteur arrêté. Par exemple, en cas de *windmilling,* la soufflante continue de tourner et la différence de vitesses entre la soufflante et l'arbre moteur permet d'actionner la pompe et donc de lubrifier le réducteur. Par ailleurs, la puissance permettant d'entraîner mécaniquement la pompe dédiée à la lubrification du réducteur est prélevée au plus proche du réducteur, ce qui est avantageux pour des raisons de sécurité (en cas de rupture de l'arbre BP entre la turbine et le compresseur par exemple).

Les besoins en huile de lubrification du réducteur en cas de *windmilling* ne sont en général que de l'ordre de 10% des besoins en huile en régime nomimal, ce qui peut être obtenu avec une pompe relativement compacte et donc facilement implantable au voisinage du réducteur.

Le carter de la pompe est accouplé à l'arbre moteur ou à l'arbre de soufflante, par l'intermédiaire de cannelures. Cet accouplement peut être direct ou par l'intermédiaire d'une partie du réducteur telle que sa couronne d'entrée ou son arbre de sortie. En effet, le carter de la pompe comprend des cannelures coopérant avec des cannelures de forme complémentaire de l'arbre moteur (ou de la couronne d'entrée du réducteur solidaire en rotation de l'arbre moteur) ou de l'arbre de soufflante (ou de l'arbre de sortie solidaire en rotation de l'arbre de soufflante).

La pompe peut être du type à palettes ou à gerotor. Les demandes de brevet EP-A1-0 736 691 et EP-A1-1 396 639 décrivent des pompes volumétriques de type à gerotor.

De préférence, le rotor de la pompe est entraîné par l'un desdits arbres par l'intermédiaire d'une couronne à denture interne ou externe. L'utilisation d'une couronne à denture interne permet aux arbres moteur et de soufflante de tourner dans le même sens. Cette solution permet ainsi de conserver le sens de rotation des arbres et d'autoriser une vitesse de rotation faible entre le rotor et le carter de la pompe (une faible vitesse de rotation permet d'avoir une pompe plus fiable avec des vitesses de glissement faible dans le cas d'une pompe à gerotor). L'utilisation d'une couronne à denture interne permet de changer le sens de rotation et d'autoriser une plus forte vitesse de rotation entre le rotor et le carter de la pompe (à besoin de lubrification égal, la forte vitesse permet d'avoir une pompe plus compacte). En conclusion, sur l'engrenage d'entrée pour l'entraînement de la pompe, la technologie de celui-ci pourra être adaptée en fonction des besoins du moteur.

En variante ou en caractéristique additionnelle, le rotor de la pompe peut être entraîné par l'un desdits arbres par l'intermédiaire d'un système d'accouplement destiné à assurer un accouplement uniquement en deçà d'une vitesse prédéterminée de rotation de l'arbre. Ceci permet d'accoupler le rotor de la pompe à l'arbre d'entraînement (tel que l'arbre BP) uniquement lorsque la vitesse de rotation de cet arbre est faible. La pompe est ainsi utilisée comme pompe de secours pour la lubrification du réducteur en cas de *windmilling.* La pompe peut toutefois être utilisée en fonctionnement normal de la turbomachine, pour la lubrification en continu du réducteur.

Le rotor de la pompe peut comprendre un arbre qui porte au moins un pignon interne de gerotor coopérant avec une couronne à denture interne qui est mobile en rotation dans le carter de la pompe.

De préférence, l'axe de rotation de l'arbre du rotor de la pompe est fixe dans le référentiel du carter de la pompe.

Avantageusement, la pompe a une forme allongée, et est par exemple sensiblement cylindrique.

La présente invention concerne également un système de transmission de couple pour une turbomachine selon la revendication 9.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une demi-vue très schématique d'une turbomachine,
- la figure 2 est une demi-vue schématique partielle d'une turbomachine selon l'invention et montre l'intégration d'une pompe de lubrification d'un réducteur de la vitesse de rotation de l'arbre de soufflante de la turbomachine,
- la figure 3 est une vue très schématique d'une pompe de lubrification pour une turbomachine selon l'invention,
- la figure 4 est une vue schématique en coupe axiale d'une pompe de lubrification pour une turbomachine selon l'invention, et
- les figures 5 et 6 sont des vues très schématiques de pompes de lubrification à gerotor et palettes, respectivement.

### DESCRIPTION DETAILLEE

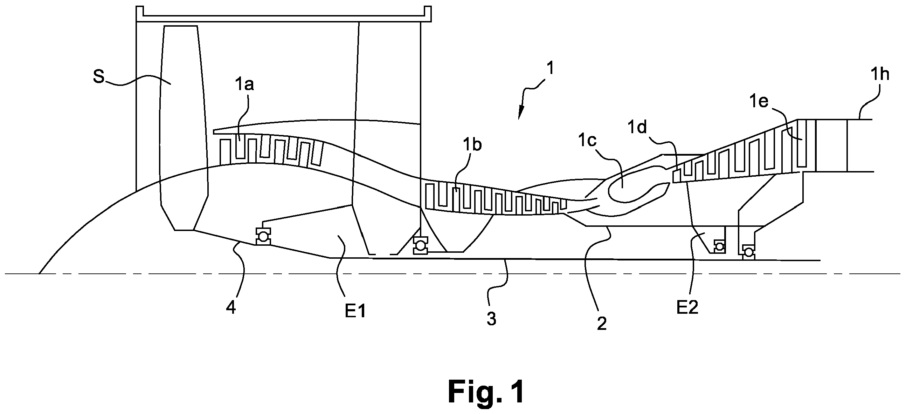

En se référant à la figure 1, on voit une turbomachine 1 du type turboréacteur qui comporte, de manière classique, une soufflante S, un compresseur basse pression 1a, un compresseur haute pression 1b, une chambre de combustion 1c, une turbine haute pression 1d, une turbine basse pression 1e et une tuyère d'échappement 1h.

Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

Dans la configuration représentée qui concerne un turboréacteur classique, sans réducteur, le disque sur lequel sont montées les aubes de la soufflante S est entraîné par un arbre de soufflante 4, ou tourillon BP, qui est lui-même entraîné directement par l'arbre BP 3. Dans le cas où un réducteur est positionné entre l'arbre BP 3 et l'arbre de soufflante 4, celui-ci est, de façon connue, un réducteur à train épicycloïdal.

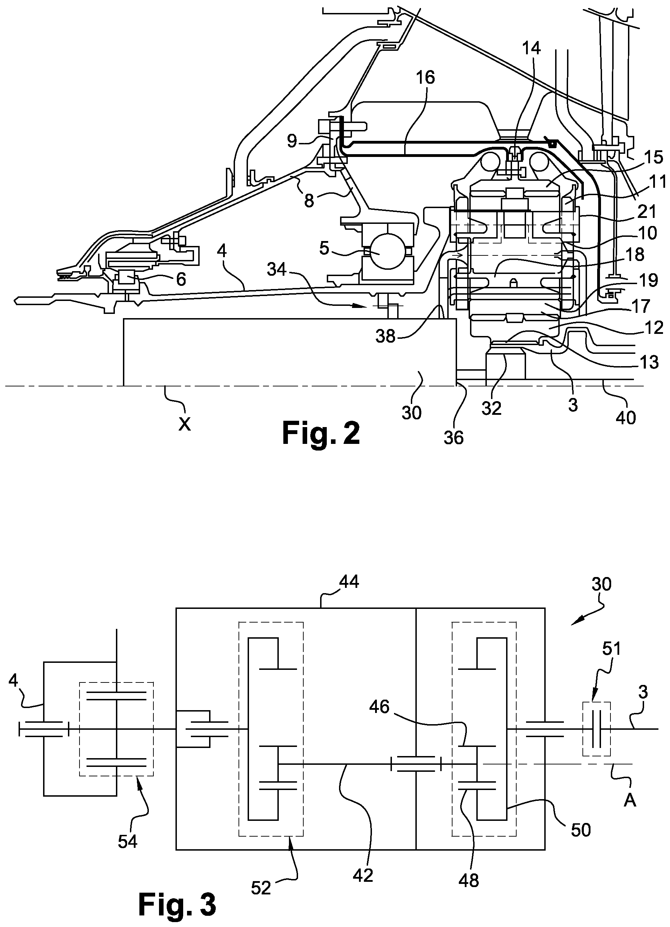

La figure 2 montre le positionnement communément retenu pour l'installation du réducteur 10 dans la partie avant du turboréacteur. Les aubes de la soufflante S sont portées par l'arbre de soufflante 4 qui est relié à la structure du moteur par l'intermédiaire d'un roulement à billes 5 qui transmet les efforts de poussée, et d'un roulement à rouleaux 6 qui autorise les dilatations longitudinales de l'arbre de soufflante.

Les paliers de ces deux roulements 5, 6 sont fixés sur une ou plusieurs pièces formant support 8 de l'arbre de soufflante 4, qui est rattaché à la structure du turboréacteur au niveau d'une bride de support du module de soufflante 9. L'arbre de soufflante 4, qui appartient avec la pièce support 8, les aubes de soufflante S et les deux roulements 5 et 6 au module de soufflante, est fixé à son extrémité aval sur le porte-satellites 11 du réducteur 10. De son côté, l'arbre BP 3 est relié au planétaire 12 du réducteur 10 par des cannelures 13.

Le réducteur 10 est fixé, par l'intermédiaire de brides de fermeture et de support 14 qui s'étendent radialement à partir de la couronne 15 du train épicycloïdal, à une des extrémités d'un carter de support 16, qui assure ainsi le maintien en place du réducteur sur l'arbre de soufflante 4 et son positionnement par rapport à l'arbre BP 3.

Le réducteur embraye, d'une part, sur les cannelures 13 de l'arbre BP 3 par l'intermédiaire des pignons d'engrenage du planétaire 12 du train épicycloïdal, et d'autre part sur l'arbre de soufflante 4 qui est rattaché au porte-satellites 11 de ce même train épicycloïdal. Classiquement, le pignon planétaire 12, dont l'axe de rotation est confondu avec celui X du turboréacteur, entraîne une série de pignons satellites 17, qui sont répartis régulièrement sur la circonférence du réducteur. Ces satellites 17 tournent eux aussi autour de l'axe X du turboréacteur, en roulant sur la couronne 15 qui est rattachée à la structure du turboréacteur par le carter de support 16. Au centre de chaque satellite est positionné un axe de satellite 18 relié au porte-satellites 11, le satellite tournant librement autour de cet axe à l'aide d'un palier lisse 19, dont la sureté de fonctionnement fait l'objet de l'invention. La rotation des satellites autour de leurs axes 18, du fait de la coopération de leurs pignons avec ceux de la couronne 15, entraîne la rotation du porte-satellites 11 autour de l'axe X, et par conséquent celle de l'arbre de soufflante 4 qui lui est lié, à une vitesse de rotation qui est inférieure à celle de l'arbre BP 3.

L'entraînement de l'arbre de soufflante 4 par le porte-satellites 11 est assuré par une série de doigts de centrage 20, répartis régulièrement sur la circonférence du réducteur, qui s'étendent axialement de l'extrémité aval de l'arbre de soufflante 4 et qui s'enfoncent dans des alésages pratiqués dans le porte-satellites 11. Le porte-satellites 11 s'étend symétriquement de part et d'autre du réducteur 10 pour refermer l'ensemble et former une enceinte, dans laquelle est mise en oeuvre une fonction de lubrification. Des douilles 21 complètent la fermeture de cette enceinte en l'obturant au niveau des axes de satellites 18, de chaque côté du réducteur 10.

Comme décrit dans ce qui précède, la lubrification du réducteur 10 est assurée par un groupe de lubrification qui est actionné par le boîtier d'accessoires du type AGB du turboréacteur. Lorsque le moteur est à l'arrêt mais que l'arbre de soufflante 4 continue de tourner (*windmilling*), la lubrification du réducteur 10 doit être assurée pour éviter une dégradation de ses paliers lisses 19. Une pompe supplémentaire d'urgence est ainsi utilisée dans la technique antérieure pour assurer la lubrification du réducteur 10 en cas d'arrêt moteur. La présente invention propose une nouvelle technologie qui facilite notamment l'intégration de ce type de pompe dans un turboréacteur.

Selon l'invention, la pompe de lubrification d'urgence comporte un carter entraîné par un premier arbre du turboréacteur et un rotor monté à l'intérieur du carter et entraîné en rotation par un second arbre du turboréacteur, qui tourne à une vitesse différente du premier arbre de façon à ce que l'actionnement de la pompe résulte de la différence de vitesses entre les arbres.

La figure 2 représente un exemple d'intégration d'une pompe 30 de ce type dans un turboréacteur du type précité. La pompe 30 a une forme allongée, par exemple sensiblement cylindrique, son axe d'allongement étant sensiblement confondu avec l'axe X de sorte que les arbres 3, 4 et la pompe 30 soient sensiblement coaxiaux.

Dans l'exemple représenté, la pompe 30 s'étend à l'intérieur de l'arbre de soufflante 4 et d'une partie d'extrémité amont de l'arbre BP 3. Le réducteur 10 est monté autour de cette partie d'extrémité amont de l'arbre BP 3 et est ainsi traversé par une partie de la pompe 30.

Le volume occupé par la pompe 30 était disponible dans la technique antérieure. Ce volume sensiblement cylindrique a par exemple une longueur de 480mm et un rayon de 60mm dans un cas particulier. Il est donc clairement envisageable d'implanter dans ce volume une pompe à huile de lubrification. Une pompe dont les dimensions autoriseraient son montage dans le volume précité pourrait par exemple fournir un débit d'huile de 4200l/h à 3500tr/min et 600l/h à 800tr/min.

L'un des éléments parmi le rotor et le carter de la pompe 30 est accouplé par des moyens 32 appropriés à l'arbre BP 3 ou à une pièce solidaire en rotation de cet arbre, telle que le planétaire 12 du réducteur 10, et l'autre élément de la pompe est accouplé par des moyens 34 appropriés à l'arbre de soufflante 4 ou à une pièce solidaire en rotation de cet arbre, telle qu'un arbre de sortie du réducteur qui est relié au porte-satellites 11.

Les moyens d'accouplement 32, 34 peuvent être des moyens de fixation, un engrenage à pignon ou des jeux de cannelures par exemple. Chaque élément (rotor ou carter) de la pompe peut par exemple comporter des cannelures engagées dans des cannelures complémentaires d'un arbre ou d'une pièce d'entraînement.

La pompe 30 comprend une entrée d'huile 36 et une sortie d'huile 38. Dans l'exemple représenté, de l'huile est acheminée jusqu'à la pompe 30 depuis l'aval du turboréacteur par une canalisation 40 qui traverse radialement le carter d'échappement puis axialement, d'aval en amont, l'arbre BP et est connectée par l'intermédiaire d'un joint tournant, du type OTB (*Oil Transfer Bearing*) par exemple, à l'entrée d'huile 36 de la pompe.

La sortie d'huile 38 de la pompe pourrait être reliée à des moyens d'injection d'huile dans le réducteur 10 par l'intermédiaire d'un joint tournant du type OTB. Toutefois, dans l'exemple représenté, le carter de pompe est solidaire ou encastré dans l'arbre de soufflante 4. On a donc plus besoin d'OTB pour relier la sortie d'huile de la pompe au porte-satellites 11 du réducteur 10. Un simple tuyau relie la sortie de la pompe aux cavités dans le portes-satellites. L'huile de lubrification arrive dans ces cavités qui sont ménagées à l'intérieur de chaque axe de satellite. Les liaisons entre les satellites et le porte-satellites 11 sont des paliers lisses lubrifiés grâce à la pompe. L'huile est amenée sans OTB à l'intérieur des axes des satellites. Ceci présente l'avantage de ne plus avoir d'OTB. L'extérieur de l'axe du satellite comporte des rainures qui permettent de créer un film d'huile. On envoi une forte pression d'huile pour créer ce film d'huile porteur, ce qui permet au porte-satellites de tourner sur son axe sans frottement. Cette huile, vu la quantité envoyée, suffit pour ensuite lubrifier et surtout évacuer les calories générées par les dents des satellites en contact avec les dents de la couronne 15 et du planétaire central 12. L'huile va jusqu'aux dents en passant par les faces amont et aval des satellites ou par des trous radiaux ménagés dans les satellites.

Dans ce mode de réalisation de la lubrification du train épicycloïdal, la transmission peut ne pas avoir de système de lubrification supplémentaire car toutes les parties sont lubrifiées. Du fait de la proximité de la pompe avec le train et du nombre d'ensembles cinématiques restreint, la lubrification de la transmission par ce seul système apparaît comme suffisamment fiable.

La pompe 30 peut être une pompe de type à palettes ou à gerotor. Ces types de pompes sont bien connus de l'homme du métier. Les demandes de brevet EP-A1-0 736 691 et EP-A1-1 396 639 décrivent par exemple des pompes volumétriques de type à gerotor.

La figure 3 représente de manière très schématique une pompe 30 à palettes ou gerotor pouvant être intégrée dans un turboréacteur

En référence à la figure 3, la pompe 30 comprend un arbre 42 qui est centré et guidé en rotation dans le carter de pompe 44 de façon à ce que son axe de rotation A soit immobile dans le référentiel du carter 44 (la position de l'arbre 42 est ainsi fixe par rapport au carter 44). Cette solution permet de synchroniser le mouvement du carter et donc des entrée et sortie d'huile par rapport à l'axe du rotor qui assure le pompage de l'huile, ce qui permet un bon fonctionnement de la pompe.

L'arbre 42 comprend un pignon 46 engrainé avec une denture interne 48 d'une couronne 50 accouplée par des moyens 51 appropriés à l'un des arbres, tels que l'arbre BP 3, et comprend également des moyens 52 d'entraînement d'au moins un pignon de gerotor ou d'au moins un rotor à palettes, qui est destiné à coopérer avec le carter de pompe 44 ou avec une couronne montée dans ce carter, pour le pompage d'huile, comme cela sera décrit plus en détail dans ce qui suit.

L'utilisation de la couronne 50 à denture interne 48 permet à l'arbre 42 de la pompe de tourner dans le même sens que l'arbre BP. En variante, dans le cas où le pignon 46 serait engrainé avec une denture externe d'une couronne 50 accouplé à l'arbre BP 3, les arbres 42, 3 de la pompe et BP tourneraient dans des sens contraires.

Par ailleurs, l'utilisation d'un pignon 46 est avantageuse car le nombre de ses dents peut être déterminé pour optimiser les vitesses de rotation relatives des arbres 42, 3.

Le carter de pompe 44 est accouplé par des moyens 54 appropriés à l'autre arbre, ici l'arbre de soufflante 4.

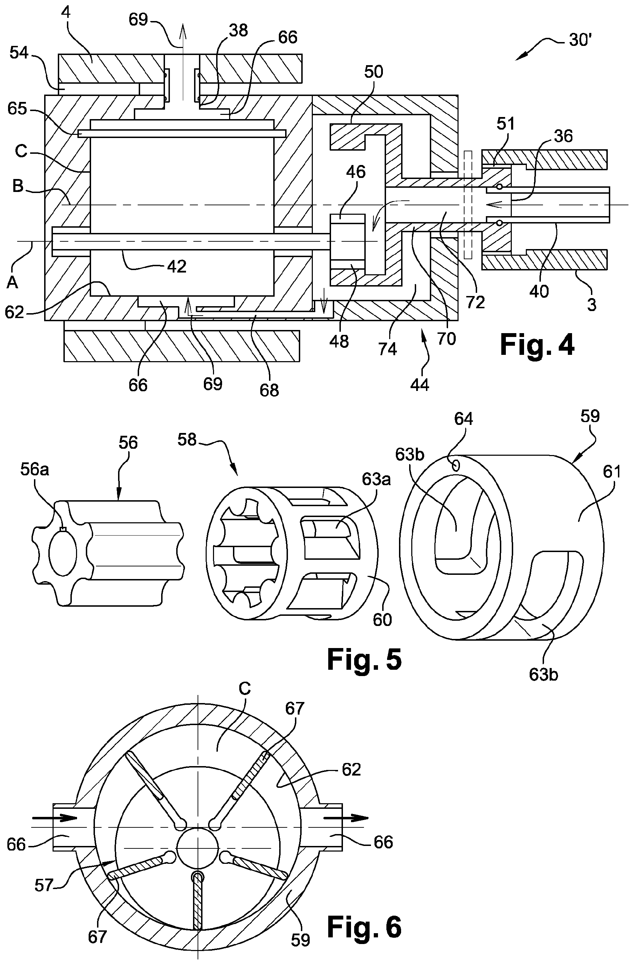

La figure 4 représente de manière plus détaillée une pompe de lubrification 30' particulièrement adaptée pour être implantée dans l'environnement précité.

Les éléments de la pompe 30' déjà décrits dans ce qui précède sont décrits par les mêmes références. Ainsi, la pompe 30' de la figure 4 comprend un arbre 42 qui est centré et guidé en rotation dans le carter de pompe 44 autour d'une axe A et dont la position relative est fixe par rapport à ce carter 44. L'arbre 42 comprend un pignon 46 engrainé avec la denture interne 48 d'une couronne 50 accouplée par des moyens d'accouplement 51 à l'arbre BP 3.

L'arbre 42 porte au moins un pignon de gerotor 56 ou un rotor à palettes 57, un pignon de gerotor 56 étant représenté en figure 5 et un rotor à palettes 57 étant représenté en figure 6.

Le pignon 56 est fixé à l'arbre 42, coaxialement à celui-ci, le pignon 56 comportant par exemple une encoche 56a dans laquelle est engagé un ergot de l'arbre 42. Le pignon 56 est mobile en rotation dans une couronne 58 à denture interne qui est elle-même mobile en rotation dans un bâti de pompe 59 (figure 5). La couronne 58 comprend une surface extérieure 60 sensiblement cylindrique qui coopère avec une surface cylindrique interne du bâti de pompe 59 qui comprend lui-même une surface cylindrique externe 61 qui coopère avec une surface cylindrique interne du carter de pompe 44, la référence 62 en figure 4 désignant cette surface cylindrique du carter 44, qui délimite une cavité C de réception de l'ensemble des pièces 56, 58, 59 de la figure 5.

La couronne 58 et le bâti de pompe 59 comprennent des orifices radiaux 63a, 63b de passage d'huile, le bâti de pompe 59 comportant en outre un alésage longitudinal 64 traversant. Le carter de pompe 44 porte une tige 65 rectiligne qui passe à travers l'alésage 64 du bâti de pompe 59 pour l'immobiliser en rotation autour de l'axe B de la cavité C et pour que les orifices radiaux 63b de passage d'huile du bâti de pompe 59 soient alignés radialement avec des orifices radiaux 66 de passage d'huile du carter de pompe 44. On comprend ainsi que, dans l'exemple représenté, la pompe 30' est à alimentation radiale et à sortie radiale d'huile.

En variante, on pourrait utiliser une pompe à alimentation axiale et sortie axiale d'huile. Les pièces 56, 58, 59 seraient alors intercalées entre deux flasques qui comprendraient des ouvertures axiales qui communiqueraient avec des orifices axiaux du carter de pompe. Le mode de réalisation de la figure 4 montre une pompe à excentrique où l'excentricité est réalisée par décalage de l'axe A par rapport à l'axe B qui est l'axe du réducteur formé par le pignon 46 et la couronne 50. Ce mode de réalisation permet de réaliser une réduction du mouvement grâce à ce petit réducteur, qui présente l'avantage d'être facilement adaptable en fonction des besoins. Un autre mode de réalisation serait possible avec l'axe A aligné avec l'axe B du réducteur. Le bâti de support 59 serait alors formé par un excentrique. On aurait ainsi un système qui prendrait moins de place mais sans réduction de la vitesse de rotation.

Le rotor à palettes 57 de la figure 6 est fixé à l'arbre 42, coaxialement à celui-ci. Il comprend des encoches radiales de logement et de déplacement radial de palettes 67 dont les extrémités radialement externes coopèrent avec la surface cylindrique interne 62 définissant la cavité C du bâti de pompe 59 (figures 4 et 6). Dans l'exemple représenté en figure 6, la pompe est également à alimentation radiale et sortie radiale d'huile.

Dans le cas où la pompe 30' comprend deux ou plus pignons de gerotor 56, chaque pignon peut être séparé des autres pignons par des flasques annulaires (non représentés) montés dans la cavité C et disposés de chaque côté des pignons 56. La tige 65 peut alors être utilisée pour immobiliser en rotation tous les bâtis de pompe 59 et flasques de la pompe.

Les moyens d'accouplement 54 entre le carter de pompe 44 et l'arbre de soufflante 4 comprennent ici des cannelures. Les moyens d'accouplement 51 du rotor de la pompe avec l'arbre BP 3 sont ici du type à osselet et sont destinés à assurer un accouplement entre la couronne 50 et l'arbre BP 3 lorsque la vitesse de cet arbre est relativement faible, ce qui est le cas lors d'un *windmilling,* et ne pas assurer cet accouplement lorsque cette vitesse est importante, en fonctionnement normal du turboréacteur. Bien entendu, la pompe 30' pourrait être destinée à lubrifier le réducteur 10 pendant toute la durée de fonctionnement du turboréacteur, et non pas seulement en cas de secours ou d'urgence du type *windmiling* par exemple. Dans ce cas, les moyens d'accouplement 51 pourraient comprendre des cannelures.

Les références 36 et 38 désignent respectivement l'entrée et la sortie d'huile de la pompe 30'. Comme décrit dans ce qui précède, la référence 40 désigne une canalisation d'huile dont l'extrémité amont est raccordée à l'entrée d'huile 36 de la pompe 30'. Dans l'exemple représenté, la couronne 50 comprend une portion d'arbre 70 qui est centrée et guidée dans un orifice du carter de pompe 44, autour de l'axe B, et qui comprend un passage longitudinal interne 72 de circulation d'huile. L'extrémité aval de ce passage 72 forme l'entrée d'huile 36 de la pompe et est raccordée à la canalisation 40, et son extrémité amont débouche dans une chambre 74 dans laquelle sont logés la couronne 50 et le pignon 46. Des conduits 68 du carter de pompe 41 assurent l'acheminement de l'huile depuis la chambre 74 jusqu'à la cavité C.

Le fonctionnement de la pompe 30', du fait de la différence de vitesses de rotation entre les arbres 3 et 4, force le passage d'huile depuis l'entrée 36 jusqu'à la sortie d'huile 38 de la pompe 30' (flèches 69).

## Revendications

1. Turbomachine, comprenant deux arbres rotatifs (3, 4) et un groupe de lubrification comportant au moins une pompe (30) comportant un carter (44) à l'intérieur duquel est monté un rotor (42) qui est entraîné par l'un desdits arbres, le carter de la pompe étant entraîné en rotation par l'autre desdits arbres de façon à ce que l'actionnement de la pompe dépende de la différence de vitesses de rotation entre les arbres, les arbres étant respectivement un arbre moteur (3) et un arbre de soufflante (4), l'arbre de soufflante étant entraîné par l'arbre moteur par l'intermédiaire d'un réducteur (10) qui est lubrifié par le groupe de lubrification, le réducteur (10) ayant une forme annulaire, la pompe (30) traversant axialement le réducteur (10) et l'arbre de soufflante (4), le carter (44) de la pompe (30) étant accouplé par des cannelures (54) à l'un desdits arbres, et le rotor (42) de la pompe (30) étant accouplé par des cannelures (51) ou osselets à l'autre desdits arbres.

2. Turbomachine selon la revendication 1, **caractérisée en ce que** les arbres rotatifs (3, 4) sont coaxiaux et le carter (44) de la pompe (30) est monté coaxialement aux arbres.

3. Turbomachine selon la revendication 1 ou 2, **caractérisée en ce que** le carter (44) de la pompe (30) est accouplé à l'arbre de soufflante (4) et le rotor (42) de la pompe est accouplé à l'arbre moteur (3).

4. Turbomachine selon l'une des revendications précédentes, **caractérisée en ce que** le rotor (42) de la pompe (30) est entraîné par l'un desdits arbres par l'intermédiaire d'une couronne (50) à denture interne (48) ou externe.

5. Turbomachine selon l'une des revendications précédentes, **caractérisée en ce que** la pompe (30) est du type à palettes ou à gerotor.

6. Turbomachine selon la revendication 5, **caractérisée en ce que** le rotor de la pompe (30') comprend un arbre (42) qui porte :
- au moins un pignon interne de gerotor (56) coopérant avec une couronne (58) à denture interne qui est mobile en rotation dans le carter (44) de la pompe, ou
- au moins un rotor à palettes (57) coopérant avec le carter (44) de la pompe.

7. Turbomachine selon la revendication 6, **caractérisée en ce que** l'axe de rotation de l'arbre (42) du rotor de la pompe (30) est fixe dans le référentiel du carter (44) de la pompe.

8. Turbomachine selon l'une des revendications précédentes, **caractérisée en ce que** la pompe (30) a une forme allongée, et est par exemple sensiblement cylindrique.

9. Système de transmission de couple pour une turbomachine, comportant deux arbres rotatifs (3, 4) accouplés ensemble par un réducteur (10) à train épicycloïdal, le système comprenant en outre un groupe de lubrification comportant au moins une pompe (30) comportant un carter (44) à l'intérieur duquel est monté un rotor (42) qui est entraîné par l'un desdits arbres, le carter de la pompe étant entraîné en rotation par l'autre desdits arbres de façon à ce que l'actionnement de la pompe dépende de la différence de vitesses de rotation entre les arbres, les arbres étant respectivement un arbre moteur (3) et un arbre de soufflante (4), l'arbre de soufflante étant entraîné par l'arbre moteur par l'intermédiaire du réducteur (10) qui est lubrifié par le groupe de lubrification, le réducteur (10) ayant une forme annulaire , la pompe (30) traversant axialement le réducteur (10) et l'arbre de soufflante (4), le carter (44) de la pompe (30) étant accouplé par des cannelures (54) à l'un desdits arbres, et le rotor (42) de la pompe (30) étant accouplé par des cannelures (51) ou osselets à l'autre desdits arbres.

## Patentansprüche

1. Turbomaschine, die zwei sich drehende Wellen (3, 4) und eine Schmiereinheit umfasst, die mindestens eine Pumpe (30) aufweist, die ein Gehäuse (44) aufweist, in dessen Inneren ein Rotor (42) angebracht ist, der von einer der Wellen angetrieben wird, wobei das Gehäuse der Pumpe in Drehung von der anderen der Wellen angetrieben wird, so dass die Betätigung der Pumpe von der Differenz der Drehzahlen zwischen den Wellen abhängig ist, wobei die Wellen jeweils eine Motorwelle (3) und eine Gebläsewelle (4) sind, wobei die Gebläsewelle durch die Motorwelle über einen Reduktor (10) angetrieben wird, der durch die Schmiereinheit geschmiert wird, wobei der Reduktor (10) eine ringförmige Form hat, wobei die Pumpe (30) axial den Reduktor (10) und die Gebläsewelle (4) durchläuft, wobei das Gehäuse (44) der Pumpe (30) an eine der Wellen durch Rillen (54) gekoppelt ist, und wobei der Rotor (42) der Pumpe (30) durch Rillen (51) oder Knöchelchen an die andere der Wellen gekoppelt ist.

2. Turbomaschine nach Anspruch 1, **dadurch gekennzeichnet, dass** die sich drehenden Wellen (3, 4) koaxial sind, und dass das Gehäuse (44) der Pumpe (30) koaxial zu den Wellen angebracht ist.

3. Turbomaschine nach Anspruch 1 oder 2, **dadurch gekennzeichnet, dass** das Gehäuse (44) der Pumpe (30) an die Gebläsewelle (4) gekoppelt ist, und dass der Rotor (42) der Pumpe an die Motorwelle (3) gekoppelt ist.

4. Turbomaschine nach einem der vorhergehenden Ansprüche, **dadurch gekennzeichnet, dass** der Rotor (42) der Pumpe (30) durch eine der Wellen mit Hilfe einer Krone (50) mit einer Innen- (48) oder Außenverzahnung angetrieben wird.

5. Turbomaschine nach einem der vorhergehenden Ansprüche, **dadurch gekennzeichnet, dass** die Pumpe (30) vom Flügel- oder Gerotortyp ist.

6. Turbomaschine nach Anspruch 5, **dadurch gekennzeichnet, dass** der Rotor der Pumpe (30) eine Welle (42) umfasst, die trägt:
- mindestens ein internes Ritzel des Gerotors (56), das mit einer Krone (58) mit einer internen Verzahnung zusammenwirkt, die in dem Gehäuse (44) der Pumpe drehbar ist, oder
- mindestens einen Flügelrotor (57), der mit dem Gehäuse (44) der Pumpe zusammenwirkt.

7. Turbomaschine nach Anspruch 6, **dadurch gekennzeichnet, dass** die Drehachse der Welle (42) des Rotors der Pumpe (30) im Bezugssystem des Gehäuses (44) der Pumpe fest ist.

8. Turbomaschine nach einem der vorhergehenden Ansprüche, **dadurch gekennzeichnet, dass** die Pumpe (30) eine längliche Form aufweist und beispielsweise im Wesentlichen zylindrisch ist.

9. System zur Drehmomentübertragung für eine Turbomaschine, die zwei sich drehende Wellen (3, 4) aufweist, die miteinander durch einen Reduktor (10) mit Planetengetriebe gekoppelt sind, wobei das System ferner eine Schmiereinheit umfasst, die mindestens eine Pumpe (30) aufweist, die ein Gehäuse (44) aufweist, in dessen Inneren ein Rotor (42) angebracht ist, der von einer der Wellen angetrieben wird, wobei das Gehäuse der Pumpe in Drehung von der anderen der Wellen angetrieben wird, so dass die Betätigung der Pumpe von der Differenz der Drehzahlen zwischen den Wellen abhängig ist, wobei die Wellen jeweils eine Motorwelle (3) und eine Gebläsewelle (4) sind, wobei die Gebläsewelle durch die Motorwelle über einen Reduktor (10) angetrieben wird, der durch die Schmiereinheit geschmiert wird, wobei der Reduktor (10) eine ringförmige Form hat, wobei die Pumpe (30) axial den Reduktor (10) und die Gebläsewelle (4) durchläuft, wobei das Gehäuse (44) der Pumpe (30) an eine der Wellen durch Nuten (54) gekoppelt ist, und wobei der Rotor (42) der Pumpe (30) durch Rillen (51) oder Knöchelchen an die andere der Wellen gekoppelt ist.

## Claims

1. Turbine engine, comprising two rotating shafts (3, 4) and a lubrication unit having at least one pump (30) having a housing (44) inside which is mounted a rotor (42), which is driven by one of said shafts, the pump housing being rotationally driven by the other of said shafts such that the actuation of the pump depends on the difference between the rotational speeds of the shafts, the shafts being a drive shaft (3) and a fan shaft (4) respectively, the fan shaft being driven by the drive shaft by means of a reducer (10) which is lubricated by the lubrication unit, the reducer (10) being annular, the pump (30) axially passing through the reducer (10) and the fan shaft (4), the housing (44) of the pump (30) being coupled by splines (54) to one of said shafts, and the rotor (42) of the pump (30) being coupled by splines (51) or linkages to the other of said shafts.

2. Turbine engine according to claim 1, **characterised in that** the rotating shafts (3, 4) are coaxial and the housing (44) of the pump (30) is mounted coaxially to the shafts.

3. Turbine engine according to claim 1 or 2, **characterised in that** the housing (44) of the pump (30) is coupled to the fan shaft (4) and the rotor (42) of the pump is coupled to the drive shaft (3).

4. Turbine engine according to one of the preceding claims, **characterised in that** the rotor (42) of the pump (30) is driven by one of said shafts by means of an internally (48) or externally toothed ring gear (50).

5. Turbine engine according to one of the preceding claims, **characterised in that** the pump (30) is of the vane or gerotor type.

6. Turbine engine according to claim 5, **characterised in that** the rotor of the pump (30') comprises a shaft (42) which has:
- at least one internal gerotor pinion (56) cooperating with an internally toothed ring gear (58) which is rotationally movable in the pump housing (44), or
- at least one vane rotor (57) cooperating with the pump housing (44).

7. Turbine engine according to claim 6, **characterised in that** the rotational axis of the shaft (42) of the rotor of the pump (30) is fixed within a reference system of the pump housing (44).

8. Turbine engine according to one of the preceding claims **characterised in that** the pump (30) has an elongated form, and is, for example, substantially cylindrical.

9. Torque transmission system for a turbine engine, comprising two rotating shafts (3, 4) coupled together by a reducer having an epicyclic gear train (10), the system additionally comprising a lubrication unit having at least one pump (30) having a housing (44) inside which is mounted a rotor (42) which is driven by one of said shafts, the pump housing being rotationally driven by the other of said shafts such that the actuation of the pump depends on the difference in the rotational speeds of the two shafts, the shafts being a drive shaft (3) and a fan shaft (4) respectively, the fan shaft being driven by the drive shaft by means of the reducer (10) which is lubricated by the lubrication unit, the reducer (10) being annular, the pump (30) axially passing through the reducer (10) and the fan shaft (4), the housing (44) of the pump (30) being coupled by splines (54) to one of said shafts, and the rotor (42) of the pump (30) being coupled by splines (51) or linkages to the other of said shafts.
